# EUROPÄISCHE PATENTSCHRIFT

(11) **EP 2 899 566 B1**
(45) Veröffentlichungstag und Bekanntmachung des Hinweises auf die Patenterteilung: **22.08.2018**
(21) Anmeldenummer: 14152456.1
(22) Anmeldetag: 24.01.2014
(51) Int. Cl.: G01S 7/497, G01S 17/88, G01S 7/481

(54) **Verfahren zum Konfigurieren eines Laserscanners und Konfigurationsobjekt dafür**
Method for configuring a laser scanner and configuration object for the same
Procédé de configuration d'un scanner laser et objet de configuration correspondant

(43) Veröffentlichungstag der Anmeldung: 29.07.2015
(73) Patentinhaber: SICK AG, 79183 Waldkirch (DE)
(72) Erfinder: Mezger, Matthias, 77704 Oberkirch (DE); Schopp, Thomas, 79112 Freiburg (DE); Ruck, Stefan, 79104 Freiburg (DE); Hulm, Christian, 74564 Crailsheim (DE)
(74) Vertreter: Ludewigt, Christoph

(56) Entgegenhaltungen:
- EP-A1- 2 518 709
- US-A1- 2011 267 262
- US-A1- 2012 062 867
- US-A1- 2012 249 997
- US-B1- 8 018 579

## Beschreibung

Die Erfindung betrifft ein Verfahren zum Konfigurieren eines Laserscanners sowie ein Konfigurationsobjekt für das Verfahren.

Es ist bekannt, wertvolle Gegenstände, z. B. Kunstwerke in Museen, mit Hilfe eines Laserscanners abzusichern. Ein solcher herkömmlicher Laserscanner ist in Figur 6 in einer schematischen Schnittdarstellung gezeigt und z. B. in der DE 43 40 756 A1 beschrieben. Ein von einem Lichtsender 12, beispielsweise einem Laser, erzeugter Lichtstrahl 14, der einzelne Lichtimpulse aufweist, wird über Lichtablenkeinheiten 16a-b in eine Überwachungsebene 18 gelenkt und dort von einem gegebenenfalls vorhandenen Objekt remittiert. Das remittierte Licht 20 gelangt wieder zu dem Laserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit die durch die Rotationsbewegung erzeugte Überwachungsebene 18. Wird ein von dem Lichtempfänger 24 empfangenes reflektiertes Lichtsignal 20 aus der Überwachungsebene 18 empfangen, so kann aus der Winkelstellung der Ablenkeinheit 16b mittels des Encoders 28 auf die Winkellage des Objektes in der Überwachungsebene 18 geschlossen werden. Zusätzlich wird die Laufzeit der einzelnen Laserlichtpulse von ihrem Aussenden bis zu dem Empfang nach Reflexion an dem Objekt in der Überwachungsebene 18 ermittelt. Aus der Lichtlaufzeit wird unter Verwendung der Lichtgeschwindigkeit auf die Entfernung des Objektes von dem Laserscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in der Überwachungsebene 18 zur Verfügung. Diese Informationen über Objektpositionen sind über eine Schnittstelle 32 ausgebbar.

Mit Hilfe eines solchen Laserscanners wird beispielsweise vor einem wertvollen Gemälde mit der Überwachungsebene des Laserscanners eine Art virtueller Vorhang vor dem Gemälde aufgespannt und ein Alarm ausgelöst, wenn sich jemand unzulässig nahe heran bewegt.

Damit der richtige Bereich, nämlich nur der Bereich, in dem das abzusichernde Gemälde hängt, als Überwachungsbereich überwacht wird, muss der Laserscanner bzw. der Überwachungsbereich vor dem Betrieb konfiguriert werden. Insbesondere muss der zu überwachende Überwachungsbereich festgestellt bzw. festgelegt werden.

Bekannte Lösungen sehen hierzu vor, dass während der Inbetriebnahme des Laserscanners mit Hilfe eines Computers und einer speziellen Software die Überwachungsbereichsgeometrie an einer graphischen Benutzeroberfläche parametrisiert und über eine Kommunikationsschnittstelle in den Laserscanner übertragen wird. Dieser Vorgang ist nur durch geschulte Anwender mit entsprechenden Computer- und Software-Kenntnissen durchführbar und erfordert einen Computer. Typischerweise ist Museumspersonal, das solche Konfigurationen vornehmen können sollte, z. B. um die Absicherung wechselnder Ausstellungen und Exponaten anzupassen, nicht geübt im Umgang mit Laserscannern und Computern.

Andere bekannte Lösungen sehen vor, dass der Überwachungsbereich direkt an dem Laserscanner mit Hilfe von Tasten und einem Display einzugeben ist. Ein solches Verfahren ist aufgrund der aufwändigen Konfigurierung nur für sehr einfache Überwachungsbereichsgeometrien möglich und erfordert speziell geschultes Personal. Des Weiteren ist es aufwändig, insbesondere wenn der Laserscanner an unzugänglichen Orten, z. B. an der Decke des Ausstellungsraums, montiert ist.

Aus der US 8,018,579 B1 ist eine Vorrichtung zur Erkennung von Gesten bekannt, bei der ein 3-D Scanner einen Raum erfasst, in dem mit Händen Gesten gemacht werden können. Zusätzlich werden in den Raum virtuelle Bedienelemente projiziert, so dass man mit den Gesten über den Scanner, der die Gesten erfasst, die virtuellen Bedienelemente bedienen kann.

Aus der US 2011/0267262 A1 ist eine Vorrichtung bekannt, bei der ein Lichtstrahl über einen diffus streuenden Schirm bewegt (gescannt) wird und mittels eines Lichtempfängers, der das diffus reflektierte Licht erfasst, erkannt wird, ob und wo der Schirm beispielsweise mit einem Finger berührt wird.

Aus der US 2012/0249997 A1 ist ein Sensor mit Laserscanner bekannt, der in drei Dimensionen scannt und zusätzlich Bilder mit einer Kamera aufnehmen kann. So kann der Sensor 3D-Bilder erstellen und sich bewegende Objekte im Sichtbereich verfolgen.

Ein weiterer Laser-Entfernungsmesser ist aus der US 2012/0062867 A1 bekannt.

Aufgabe der vorliegenden Erfindung ist es, ein Verfahren zur Konfiguration eines Überwachungsbereiches eines Laserscanners zur Verfügung zu stellen, mit dem es möglich ist, sehr einfach, schnell und intuitiv den Überwachungsbereich zu konfigurieren sowie ein Konfigurationsobjekt dafür bereitzustellen.

Diese Aufgabe wird gelöst durch ein Verfahren zum Konfigurieren eines Laserscanners mit den Schritten:
- Bereitstellen eines Konfigurationsobjekts,
- Initiieren eines Einlernmodus des Laserscanners,
- Erfassen des ungestörten Sichtfeldes des Laserscanners durch den Laserscanner und Abspeichern statischer Objekte im Sichtfeld als Hintergrund,
- Einbringen des Konfigurationsobjekts in das Sichtfeld,
- Verweilen des Konfigurationsobjekts an einem Ort, der ein Eckpunkt eines zu konfigurierenden Überwachungsbereiches sein soll,
- Erfassen des Verweilens durch den Laserscanner und Abspeichern der Ortskoordinaten des Eckpunkts,
- Wiederholen der Schritte d) bis f) solange bis alle Eckpunkte erfasst sind,
- Festlegen des Überwachungsbereiches mittels der erfassten Eckpunkte,
- Beenden des Einlernmodus.

Der wesentliche Vorteil des erfindungsgemäßen Verfahrens ist, dass die Konfiguration des Überwachungsbereichs maximal vereinfacht ist. Das Konfigurationsobjekt kann in der einfachsten Ausführung ein Finger oder ein Arm sein, so dass prinzipiell nicht einmal zusätzliche Hilfsmittel notwendig sind. Der Laserscanner muss das Konfigurationsobjekt nicht kennen. Das Personal, das die Konfiguration vornimmt, muss lediglich den Einlernmodus starten und dann nur noch die Eckpunkte des Überwachungsbereichs beispielsweise mit dem Finger "anzeigen". Die eigentliche Konfiguration wird dann völlig selbstständig vom Laserscanner erledigt, nämlich die "Fingerzeige" als Eckpunkte definiert und daraus der Überwachungsbereich festgelegt.

Mit dieser einfachen Konfiguration des Überwachungsbereichs ist kein Computer, keine Software und somit kaum Vorkenntnisse notwendig, so dass auch mit technischen Geräten ungeschultes Museumspersonal eine solche Konfigurationen fehlerfrei vornehmen kann und damit wechselnde Ausstellungen und Exponate schnell und einfach abgesichert werden können.

In Weiterbildung der Erfindung wird der Einlernmodus mittels eines Schaltsignals, das vorzugsweise von einem Schlüsselschalter ausgelöst wird, über einen Schaltsignaleingang des Laserscanners initiiert. Damit ist sichergestellt, dass der Einlernmodus nicht versehentlich ausgelöst werden kann.

Es ist sinnvoll, wenn statische Objekte im Sichtfeld des Laserscanners beim Erfassen des Sichtfeldes des Laserscanners als Hintergrund eingelernt werden, so dass eine Änderung des Hintergrundes möglicherweise ebenfalls ein entsprechendes Signal auslösen könnte.

Um bei der Konfiguration die Eckpunkte des Überwachungsbereichs für den Laserscanner kenntlich zu machen, ist es sinnvoll, wenn das Verweilen des Konfigurationsobjekts im Sichtfeld, wodurch ein Eckpunkt als solcher für den Laserscanner erkennbar ist, einige Sekunden beträgt, vorzugsweise 3 bis 5 Sekunden.

Damit derjenige, der den Laserscanner konfiguriert, auch sicher sein kann, dass ein Eckpunkt erfasst wurde, ist es vorteilhaft, wenn nach Erfassen und/oder Abspeichern des Ortes, der ein Eckpunkt des zu konfigurierenden Überwachungsbereichs sein soll, der Laserscanner ein Signal ausgibt, wobei dieses Signal optisch und/oder akustisch ist und/oder über eine Schnittstelle ausgegeben werden kann.

Es kann Überwachungsbereichsformen geben, die aufgrund der Funktionsweise des Laserscanners nicht erlaubt sind, so dass in Weiterbildung der Erfindung ein Eckpunkt auf Gültigkeit geprüft wird und als ungültig verworfen wird, wenn er ein Ungültigkeitskriterium erfüllt.

Da ein Eckpunkt theoretisch nur ein Punkt ist und das Konfigurationsobjekt eine gewisse Ausdehnung in der Scanebene aufweist (zum Beispiel die Fingerdicke), ist in Weiterbildung der Erfindung vorgesehen, dass als Eckpunkt der Mittelpunkt des Konfigurationsobjekts innerhalb der Scanebene definiert wird.

Für die meisten Anwendungsfälle ist es ausreichend, wenn der Überwachungsbereichsrand einen Polygonzug bildet, wobei die Eckpunkte mit Geraden verbunden sind. Ein solcher Polygonzug ist einfach und schnell zu berechnen.

Um bei der Konfiguration auch Korrekturen vornehmen zu können, ist vorgesehen, dass mittels des Konfigurationsobjekts ein Löschen eines konfigurierten Überwachungsbereiches initiiert werden kann.

Die o. g. Aufgabe wird auch gelöst durch ein Konfigurationsobjekt für die Durchführung des erfindungsgemäßen Verfahrens, das dadurch gekennzeichnet ist, dass das Konfigurationsobjekt als Stab ausgebildet ist und dass der Stab eine Kommunikationsschnittstelle aufweist, um mit dem Laserscanner zu kommunizieren.

Über diese Kommunikationsschnittstelle lassen sich Informationen des Laserscanners an den Einrichter mittels einer Signalgebereinheit übermitteln, beispielsweise das Erfassen und Abspeichern eines gültigen Eckpunktes, so dass der Einrichter weiß, dass der jeweilige Eckpunkt korrekt erfasst wurde.

Die Kommunikation kann weiter Informationen enthalten bezüglich Verwerfen eines Eckpunktes und/oder Löschen eines Überwachungsbereiches.

Besonders vorteilhaft ist es, wenn die Signalgebereinheit ausgebildet ist, ein Vibrationssignal auszugeben. Denn dann ist es besonders einfach für den Einrichter in jeder räumlichen Situation zu erkennen, wann der Laserscanner die Eckpunkte erfasst hat.

Im Folgenden wird die Erfindung anhand von Ausführungsbeispielen unter Bezugnahme auf die Zeichnung im Einzelnen erläutert. In der Zeichnung zeigen:
- Fig. 1: ein Anwendungsbeispiel für das erfindungsgemäße Verfahren;
- Fig. 2: das Anwendungsbeispiel aus Fig. 1 in anderer Perspektive;
- Fig. 3: andere Formen gültiger und ungültiger Überwachungsbereichsformen;
- Fig. 4: ein Ausführungsbeispiel eines Konfigurationsobjekts;
- Fig. 5: ein Ablaufdiagramm des erfindungsgemäßen Verfahrens;
- Fig. 6: ein Laserscanner nach dem Stand der Technik.

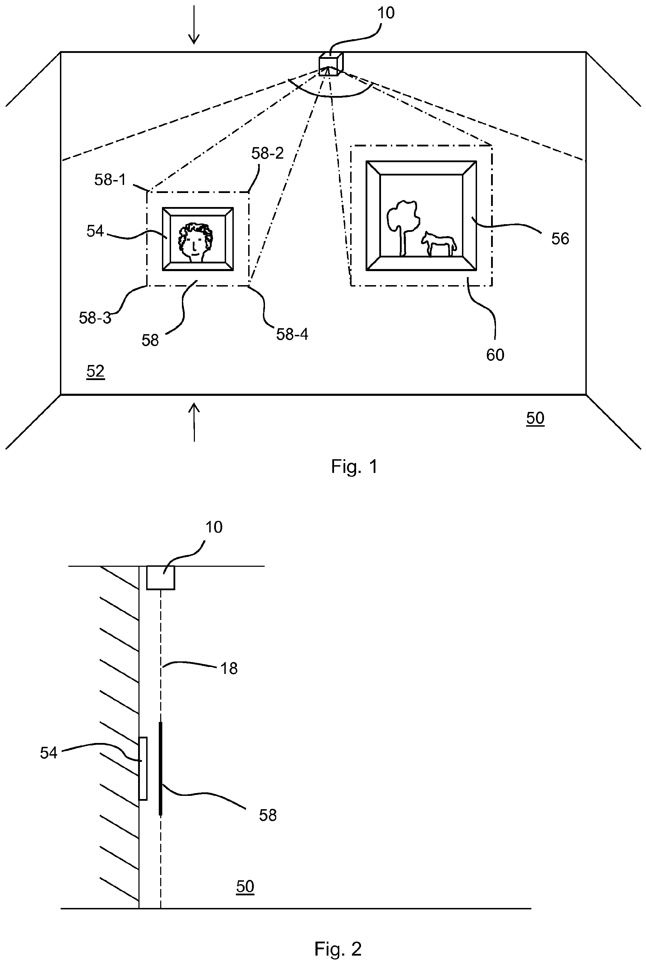

Fig. 1 und 2 zeigen einen typischen Anwendungsfall der Erfindung. In einem Ausstellungsraum 50 sind an einer Wand 52 Gemälde 54 und 56 ausgestellt, die gegen unbefugten Zugriff abgesichert sein sollen. Dazu dient ein im Bereich der Wand 52 an der Decke angeordneter Laserscanner 10, wie er eingangs bereits beschrieben wurde. Die Überwachungsebene 18 bildet einen virtuellen Vorhang vor den Gemälden 54 und 56. Da aber nicht die gesamte Wand 52 abgesichert sein muss, sondern lediglich Überwachungsbereiche 58 und 60, hinter denen die Gemälde hängen, müssen die Überwachungsbereiche, also die Formen, Größen und Positionen der Überwachungsbereiche 58 und 60 in den Laserscanner 10 eingelernt werden. Dieses Konfigurieren der Überwachungsbereiche 58 und 60 erfolgt mit dem erfindungsgemäßen Verfahren und einem erfindungsgemäßen Konfigurationsobjekt 62.

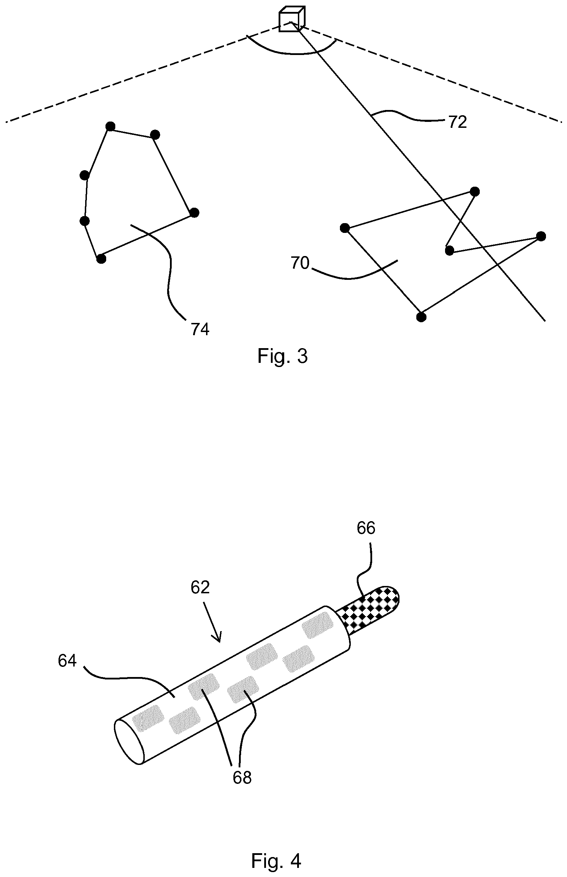

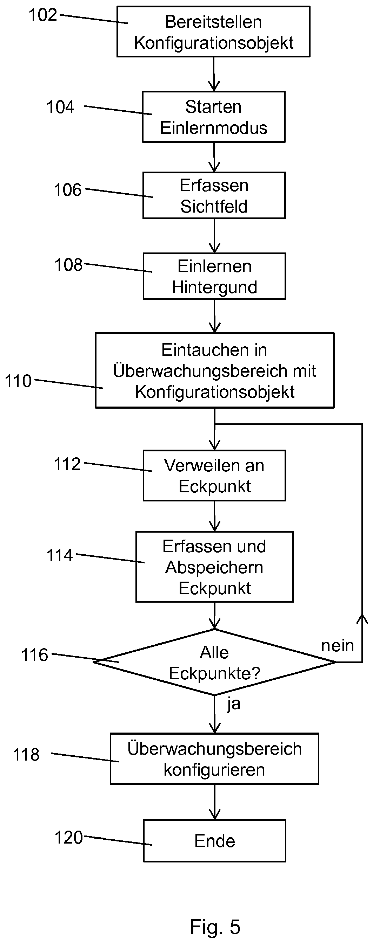

Das erfindungsgemäße Verfahren wird insbesondere anhand der Fig. 5 erläutert. In einem ersten Schritt 102 wird ein Konfigurationsobjekt bereitgestellt. Dies kann in der einfachsten Ausführung ein Finger oder ein sonstiges Körperteil (z. B. ein Arm) oder vorzugsweise das erfindungsgemäße Konfigurationsobjekt 62 sein. Dieses Konfigurationsobjekt 62, das in Fig. 4 schematisch dargestellt ist, ist als Stab 64 mit einem Griff 66 ausgebildet. Der Stab 64 enthält auf seiner Oberseite Lichtempfangselemente 68, die das Laserlicht des Laserscanners aufnehmen können. Des Weiteren umfasst das Konfigurationsobjekt 62 eine Signalgebereinheit, die in den Griff 66 integriert ist und ein Signal durch Vibration des Griffs 66 ausgeben kann.

In einem Schritt 104 wird zunächst der Einlernmodus des Laserscanners initiiert. Dies kann mit einem Schlüsselschalter oder Ähnlichem bewirkt werden.

Im darauf folgenden Schritt 106 erfasst der Laserscanner zunächst das freie ungestörte Sichtfeld und speichert im Schritt 108 statische Objekte im Sichtfeld als Hintergrund ab.

Dann erfolgt das eigentliche Definieren der Überwachungsbereichsgrenzen. Dazu wird im Schritt 110 das Konfigurationsobjekt 62 in das Sichtfeld des Laserscanners eingebracht und im Schritt 112 an einen zu definierenden Eckpunkt des Überwachungsbereichs 58 gebracht und dort gehalten. Durch das Verweilen des Konfigurationsobjekts 62 an diesem Punkt erkennt der Laserscanner 10, dass dies ein Eckpunkt des Konfigurationsbereichs 58 sein soll (z. B. 58-1 bis 58-4).

Im Schritt 114 wird der Laserscanner 10 diesen Punkt als Eckpunkt erfassen und dessen Ortskoordinaten abspeichern. Die Information, dass der Laserscanner den Eckpunkt erfasst und abgespeichert hat, wird vorzugsweise an das Konfigurationsobjekt 62 übermittelt. Dies kann zum Beispiel dadurch geschehen, dass der Laserscanner eine gewisse Anzahl n seiner Lichtpulse kurzzeitig nicht aussendet, was die Lichtempfangselemente 68 des Konfigurationsobjekts 62 erfassen und somit als Bestätigungssignal interpretieren. Diese Information kann dann über die Signalgebereinheit an den Einrichter übermittelt werden, beispielsweise durch ein einmaliges Vibrieren des Griffs 66. In gleicher Weise kann beispielsweise auch die Information übermittelt werden, dass der Laserscanner 10 diesen Eckpunkt, aus welchen Gründen auch immer, nicht abgespeichert hat. Eine solche Information könnte in gleicher Weise dadurch erfolgen, dass m (ungleich n) Lichtpulse ausgesandt werden und diese Informationen an den Einrichter über ein gepulstes Vibrieren des Griffs 66 übermittelt wird. Alternativ könnte jegliche Information auch direkt am Laserscanner z. B. über LEDs angezeigt werden, so dass sie vom Einrichter optisch abgelesen werden kann.

Diese Schritte 112 und 114 zum Erfassen und Definieren der Eckpunkte werden so oft wiederholt (Schritt 116), bis alle Eckpunkte 58-1 bis 58-4 im Laserscanner 10 abgespeichert sind.

Schließlich wird im Schritt 118, nach Eingabe aller Eckpunkte 58-1 bis 58-4, der Überwachungsbereich 58 festgelegt und ist damit konfiguriert. Für die meisten Anwendungsfälle ist es ausreichend, wenn der Überwachungsbereichsrand einen Polygonzug bildet, wobei die Eckpunkte mit Geraden verbunden sind. Ein solcher Polygonzug ist einfach und schnell zu berechnen.

Zum Schluss muss in einem Schritt 120 der Laserscanner dann wieder in den Normalbetrieb gesetzt werden.

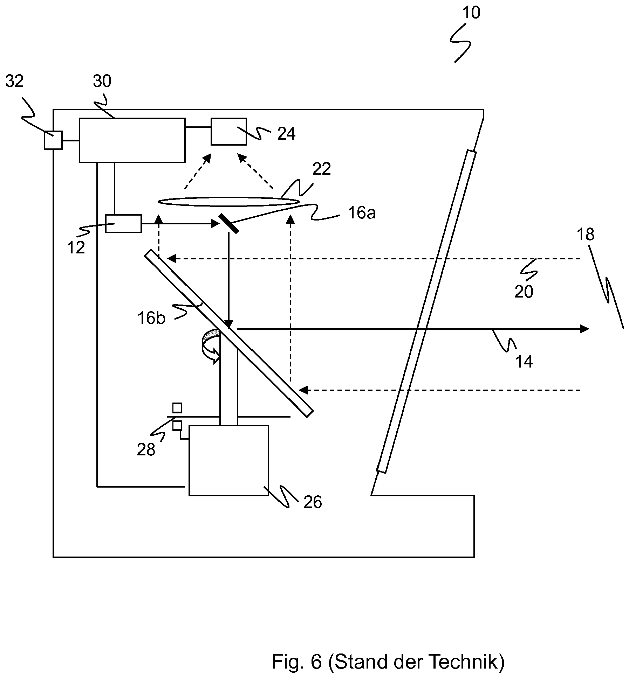

Es kann Überwachungsbereichsformen geben, die aufgrund der Funktionsweise des Laserscanners 10 nicht erlaubt sind, so dass wie oben erwähnt ein Eckpunkt auf Gültigkeit geprüft wird und als ungültig verworfen wird, wenn er ein Ungültigkeitskriterium erfüllt. Beispielsweise arbeiten Laserscanner nach dem Stand der Technik (Fig. 6) häufig in der Weise, als dass ein aktuell gemessener Entfernungswert eines Objektes lediglich mit hinterlegten Minimalwerten und Maximalwerten, die den Überwachungsbereichsgrenzen bei einem entsprechenden Winkel entsprechen, verglichen wird. Dies ist in den meisten Anwendungsfällen ausreichend, denn der Laserscanner 10 muss lediglich feststellen, ob ein Objekt (irgendwo) im Überwachungsbereich sich befindet oder nicht. Der Überwachungsbereich 70, der in Fig. 3 dargestellt ist, hat allerdings eine Form, die diese Auswertung bei bestimmten Winkeln nicht erlaubt, wie an dem beispielhaften Sendestrahl 72 erkennbar ist, der nämlich den Überwachungsbereich 70 zweimal schneidet. Dadurch ist eine eindeutige Zuordnung zu einem Minimalwert und zu einem Maximalwert nicht mehr möglich, denn davon gibt es bei diesem Winkel je zwei. Fig. 3 zeigt zur Verdeutlichung zusätzlich noch einen weiteren beispielhaften Überwachungsbereich 74, der zwar eine nicht-rechteckige Form aufweist, die aber insgesamt erlaubt ist, wenn der Laserscanner 10 in der zuvor erwähnten Weise arbeitet.

Da ein Eckpunkt theoretisch nur ein Punkt ist und das Konfigurationsobjekt 62 eine gewisse Ausdehnung in der Scanebene aufweist, nämlich den Durchmesser des Stabes 64, ist vorgesehen, dass der Laserscanner 10 den Mittelpunkt des Stabes 64 berechnet und diesen Mittelpunkt als Eckpunkt definiert.

Um bei der Konfiguration auch Korrekturen vornehmen zu können, ist vorgesehen, dass mittels des Konfigurationsobjekts 62 ein Löschen eines konfigurierten Überwachungsbereiches initiiert werden kann. Dies geschieht, indem das Konfigurationsobjekt 62 statisch für lange Zeit ortsstabil an einer Position innerhalb des zu löschenden Überwachungsbereichs verbleibt, zum Beispiel für 10 s. Dass das Löschen des kompletten Überwachungsbereichs im Laserscanner 10 erfolgte, kann in analoger Weise wie die erfolgreiche Speicherung von Eckpunkten an das Konfigurationsobjekt 62 zurück gesendet werden und über die Signalgebereinheit an den Einrichter ausgegeben werden.

## Patentansprüche

1. Verfahren zum Konfigurieren eines Laserscanners mit den Schritten:
a) Bereitstellen eines Konfigurationsobjekts,
b) Initiieren eines Einlernmodus des Laserscanners,
c) Erfassen des ungestörten Sichtfeldes des Laserscanners durch den Laserscanner und Abspeichern statischer Objekte im ungestörten Sichtfeld als Hintergrund,
d) Einbringen des Konfigurationsobjekts in das Sichtfeld,
e) Verweilen des Konfigurationsobjekts an einem Ort, der ein Eckpunkt eines zu konfigurierenden Überwachungsbereiches sein soll,
f) Erfassen des Verweilens durch den Laserscanner und Abspeichern der Ortskoordinaten des Eckpunkts,
g) Wiederholen der Schritte d) bis f) solange bis alle Eckpunkte erfasst sind,
h) Festlegen des Überwachungsbereiches mittels der erfassten Eckpunkte,
i) Beenden des Einlernmodus.

2. Verfahren nach Anspruch 1, **dadurch gekennzeichnet, dass** der Einlernmodus mittels eines Schaltsignals, das vorzugsweise von einem Schlüsselschalter ausgelöst wird, über einen Schaltsignaleingang des Laserscanners initiiert wird.

3. Verfahren nach einem der vorhergehenden Ansprüche, **dadurch gekennzeichnet, dass** das Verweilen wenige Sekunden, vorzugsweise 3 bis 5 Sekunden, beträgt.

4. Verfahren nach einem der vorhergehenden Ansprüche, **dadurch gekennzeichnet, dass** nach Erfassen und/oder Abspeichern des Ortes, der ein Eckpunkt des zu konfigurierenden Überwachungsbereichs sein soll, der Laserscanner ein Signal ausgibt.

5. Verfahren nach Anspruch 4, **dadurch gekennzeichnet, dass** das Signal optisch und/oder akustisch ist und/oder über eine Schnittstelle ausgegeben werden kann.

6. Verfahren nach einem der vorhergehenden Ansprüche, **dadurch gekennzeichnet, dass** ein Eckpunkt auf Gültigkeit geprüft wird und als ungültig verworfen wird, wenn er ein Ungültigkeitskriterium erfüllt.

7. Verfahren nach einem der vorhergehenden Ansprüche, **dadurch gekennzeichnet, dass** als Eckpunkt der Mittelpunkt des Konfigurationsobjekts innerhalb der Scanebene definiert wird.

8. Verfahren nach einem der vorhergehenden Ansprüche, **dadurch gekennzeichnet, dass** der Überwachungsbereichsrand einen Polygonzug bildet, wobei die Eckpunkte mit Geraden verbunden sind.

9. Verfahren nach einem der vorhergehenden Ansprüche, **dadurch gekennzeichnet, dass** mittels des Konfigurationsobjekts ein Löschen eines konfigurierten Überwachungsbereiches initiiert werden kann.

10. Konfigurationsobjekt ausgebildet für die Durchführung eines Verfahrens nach einem der vorhergehenden Ansprüche, **dadurch gekennzeichnet, dass** das Konfigurationsobjekt als Stab ausgebildet ist und dass der Stab eine Kommunikationsschnittstelle aufweist, um mit dem Laserscanner zu kommunizieren.

11. Konfigurationsobjekt nach Anspruch 10, **dadurch gekennzeichnet, dass** eine Signalgebereinheit vorgesehen ist, um ein Erfassen und Abspeichern eines Eckpunktes und/oder ein Verwerfen eines Eckpunktes und/oder ein Löschen eines Überwachungsbereiches anzuzeigen.

12. Konfigurationsobjekt nach Anspruch 11, **dadurch gekennzeichnet, dass** die Signalgebereinheit ausgebildet ist, ein Vibrationssignal auszugeben.

## Claims

1. Method for configuring a laser scanner with the steps:
a) Providing a configuration object,
b) Initiating a teach-in mode of the laser scanner,
c) Detection of the undisturbed field of view of the laser scanner by the laser scanner and storage of static objects in the undisturbed field of view as background,
d) Bringing the configuration object into the field of view,
e) Dwelling of the configuration object at a location that is to be a corner point of a monitoring area to be configured,
f) Recording the dwell time by the laser scanner and saving the location coordinates of the corner point,
g) Repeating steps d) to f) until all corner points are recorded,
h) Determination of the monitoring area by means of the recorded corner points,
i) Exiting the teach-in mode.

2. Method according to claim 1, **characterized in that** the teach-in mode is initiated by means of a switching signal, which is preferably triggered by a key switch, via a switching signal input of the laser scanner.

3. Method according to one of the preceding claims, **characterized in that** the residence time is a few seconds, preferably 3 to 5 seconds.

4. Method according to one of the preceding claims, **characterized in that** after detection and/or storage of the location which is to be a corner point of the monitoring area to be configured, the laser scanner outputs a signal.

5. Method according to claim 4, **characterized in that** the signal is optical and/or acoustic and/or can be output via an interface.

6. Method according to one of the preceding claims, **characterized in that** a corner point is checked for validity and is rejected as invalid if it fulfils an invalidity criterion.

7. Method according to one of the preceding claims, **characterized in that** the center point of the configuration object within the scanning plane is defined as the corner point.

8. Method according to one of the preceding claims, **characterized in that** the edge of the monitored area forms a polygon course, the corner points being connected by straight lines.

9. Method according to one of the preceding claims, **characterized in that** a deletion of a configured monitoring area can be initiated by means of the configuration object.

10. Configuration object adapted to perform a procedure according to any of the preceding claims, **characterized in that** the configuration object is configured as a rod and **in that** the rod has a communication interface for communicating with the laser scanner.

11. Configuration object according to claim 10, **characterized in that** a signal transmitter unit is provided in order to indicate detection and storage of a corner point and/or rejection of a corner point and/or deletion of a monitoring area.

12. Configuration object according to claim 11, **characterized in that** the signal transmitter unit is designed to output a vibration signal.

## Revendications

1. Procédé de configuration d'un scanner laser avec les étapes :
a) Fournir un objet de configuration,
b) Lancement d'un mode d'apprentissage du scanner laser,
c) Détection du champ de vision non perturbé du scanner laser par le scanner laser et stockage d'objets statiques dans le champ de vision non perturbé comme arrière-plan,
d) Amener l'objet de configuration dans le champ de vision,
e) Persistance de l'objet de configuration à un endroit qui doit être un point d'angle d'une zone de surveillance à configurer,
f) Enregistrement de la persistance par le scanner laser et sauvegarde des coordonnées d'emplacement du point d'angle,
g) Répéter les étapes d) à f) jusqu'à ce que tous les points d'angle soient enregistrés,
h) Détermination de la zone de surveillance au moyen des points d'angle enregistrés,
i) Quitter le mode d'apprentissage.

2. Procédé selon la revendication 1, **caractérisé en ce que** le mode d'apprentissage est déclenché au moyen d'un signal de commutation, de préférence déclenché par un interrupteur à clé, par l'intermédiaire d'une entrée de signal de commutation du scanner laser.

3. Procédé selon l'une des revendications précédentes, **caractérisé en ce que** la persistance est de quelques secondes, de préférence de 3 à 5 secondes.

4. Procédé selon l'une des revendications précédentes, **caractérisé en ce qu'**après la détection et/ou la mémorisation de l'emplacement qui doit être un point d'angle de la zone de surveillance à configurer, le scanner laser délivre un signal.

5. Procédé selon la revendication 4, **caractérisé en ce que** le signal est optique et/ou acoustique et/ou peut être émis via une interface.

6. Procédé selon l'une des revendications précédentes, **caractérisé en ce que** la validité d'un point d'angle est vérifiée et rejettée comme invalide s'il remplit un critère d'invalidité.

7. Procédé selon l'une des revendications précédentes, **caractérisé en ce que** le point central de l'objet de configuration dans le plan de balayage est défini comme point d'angle.

8. Procédé selon l'une des revendications précédentes, **caractérisé en ce que** le bord de la zone surveillée forme un parcours polygonal, et les points d'angle sont reliés par des lignes droites.

9. Procédé selon l'une des revendications précédentes, **caractérisé en ce qu'**une suppression d'une zone de surveillance configurée peut être déclenchée au moyen de l'objet de configuration.

10. Objet de configuration adapté pour exécuter une procédure selon l'une des revendications précédentes, **caractérisé en ce que** l'objet de configuration est configuré sous la forme d'une tige et **en ce que** la tige possède une interface de communication pour communiquer avec le scanner laser.

11. Objet de configuration selon la revendication 10, **caractérisé en ce qu'**une unité émettrice de signaux est prévue pour indiquer la détection et l'enregistrement d'un point d'angle et/ou le rejet d'un point d'angle et/ou la suppression d'une zone de surveillance.

12. Objet de configuration selon la revendication 11, **caractérisé en ce que** l'unité émettrice de signaux est conçue pour émettre un signal de vibration.
